# EUROPÄISCHE PATENTANMELDUNG

(11) **EP 4 407 928 A1**
(43) Veröffentlichungstag der Anmeldung: **31.07.2024**
(21) Anmeldenummer: 23154003.0
(22) Anmeldetag: 30.01.2023
(51) Int. Cl.: H04L 9/32

(54) **AUTHENTISIERUNG IN ABHÄNGIGKEIT WEITERER DIGITALER ZERTIFIKATE**

(71) Anmelder: Siemens Aktiengesellschaft, 80333 München (DE)
(72) Erfinder: Falk, Rainer, 85586 Poing (DE); Fries, Steffen, 85598 Baldham (DE)
(74) Vertreter: Siemens Patent Attorneys

(57) **Zusammenfassung**

Die Erfindung betrifft ein Verfahren zum Entscheiden über ein Zulassen einer Authentisierung durch ein erstes digitales Zertifikat eines Kommunikationspartners bei einem Empfänger. Aus dem ersten digitalen Zertifikat werden erfasst (S2):
∘ eine erste Information zu einem ersten kryptographischen Verfahren des ersten digitalen Zertifikats und
∘ mindestens eine weitere Information zu jeweils einem weiteren kryptographischen Verfahren, wobei das jeweils eine weitere kryptographische Verfahren jeweils einem weiteren digitalen Zertifikat des Kommunikationspartners zugehörig ist.
Darauf basierend erfolgt das Entscheiden (S6) über das Zulassen der Authentisierung durch das erste Zertifikat in Abhängigkeit des Vergleichens.

Außerdem betrifft die Erfindung ein korrespondierendes Verfahren zum Authentisieren eines Kommunikationspartners mittels eines digitalen Zertifikats bei einem Empfänger, ein Computerprogrammprodukt und ein computerlesbares Medium.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Entscheiden über ein Zulassen einer Authentisierung durch ein erstes digitales Zertifikat eines Kommunikationspartners bei einem Empfänger. Die Erfindung betrifft außerdem ein korrespondierendes Verfahren zum Authentisieren eines Kommunikationspartners mittels eines digitalen Zertifikats bei einem Empfänger, und ein zugehöriges Computerprogrammprodukt und ein zugehöriges computerlesbares Medium.

### Beschreibung des Stands der Technik

Ein digitales Zertifikat, insbesondere ein Public-Key-Zertifikat z.B. nach X.509, bestätigt, welchem Nutzer ein bestimmter öffentlicher Schlüssel zugeordnet ist. Der Nutzer kann dadurch seine Identität nachweisen, wenn er sich mit seinem privaten und dem zugehörigen öffentlichen Schlüssel (Teil des Zertifikates) authentisiert.

Mit der Einführung neuer kryptographischer Algorithmen, insbesondere der Einführung von Post-Quantum-sicheren kryptographischen Algorithmen, besteht der Bedarf, dass ein Nutzer über mehrere Schlüsselpaare, bestehend jeweils aus einem privatem und einem öffentlichen Schlüssel verfügt. Diese Schlüsselpaare für unterschiedliche kryptographische Algorithmen können in hybriden kryptographischen Authentisierungsprotokollen verwendet werden, oder es kann eine mehrfache Authentisierung unter Nutzung der Schüssel unterschiedlicher kryptographischer Algorithmen erfolgen, oder es kann eines oder eine Teilmenge der vorhandenen Schlüssel bzw. der unterstützten kryptographischen Algorithmen ausgewählt werden.

In Diskussionen zu Post-Quantum-Kryptographie wird auch ein Ansatz vertreten, dass ein Nutzer über mehrere, voneinander unabhängige digitale Zertifikate verfügt, die jeweils einen öffentlichen Schlüssel eines Nutzers seiner Mehrzahl von öffentlichen Schlüsseln bestätigen.

Von mehreren, voneinander unabhängigen digitalen Zertifikaten zu unterscheiden sind hybride Zertifikate, welche selbst mehrere Schlüssel enthalten. Aus US 9660978 B1 (ISARA) und US 10425401 (ISARA) ist bekannt, dass ein zweiter Schlüssel beziehungsweise eine zweite digitale Signatur als Erweiterungsfeld in einem digitalen Zertifikat enthalten sein können. Solche hybriden Zertifikate, welche selbst mehrere Schlüssel enthalten, werden zur besseren Unterstützung von Post-Quantum-Kryptographie vorgeschlagen. Aus ITU-T X.509.2019 ist außerdem bekannt, dass ein Zertifikat mehrere öffentliche Schlüssel und auch mehrere Signaturen, die mit unterschiedlichen Algorithmen gebildet wurden, enthalten kann. Dazu definiert der Standard eine Erweiterung, in der diese Informationen (alternativer öffentlicher Schlüssel und alternative Signaturen) enthalten sind.

Es wird derzeit kontrovers diskutiert, ob solche Hybridzertifikate genutzt werden sollten, oder ob besser mehrere herkömmliche digitale Zertifikate verwendet werden sollten.

Bei mehreren, voneinander unabhängigen digitalen Zertifikaten werden keine geänderten Zertifikatsformate benötigt (lediglich Object-Identifier zur Identifizierung der neuen kryptographischen Verfahren müssen vorhanden sein, damit in einem Zertifikat angegeben werden kann, für welches kryptographische Verfahren der im digitalen Zertifikat enthaltene öffentliche Schlüssel vorgesehen ist). Eine Gegenstelle muss sich dabei jedoch darauf verlassen, dass ein Nutzer das bestmögliche digitale Zertifikat (das heißt, das "sicherste" oder das "stärkste" digitale Zertifikat) oder eine bestmögliche Menge von digitalen Zertifikaten gegenüber einem Kommunikationspartner vorweist und für seine Authentisierung verwendet. Gerade während einer Übergangsphase (Post-Quantum-Migration) ist davon auszugehen, dass viele Knoten noch herkömmliche kryptographische Verfahren akzeptieren müssen, um mit anderen, noch nicht Post-Quantum-fähigen Knoten kommunizieren zu können.

Es besteht dabei das Problem von sogenannten "Bidding-Down-Angriffen". Ein Angreifer soll nicht ausnutzen können, dass ein angegriffener Knoten ein schwaches kryptographisches Verfahren für die Authentisierung des sich authentisierenden Knotens akzeptiert, obwohl der sich authentisierende Knoten auch einen Authentisierungsschlüssel bzw. ein Authentisierungszertifikat für ein stärkeres kryptographisches Verfahren nutzen könnte.

Es besteht somit ein Bedarf an einem Schutz vor Bidding-Down-Angriffen, wenn ein Knoten über eine Mehrzahl von Authentisierungszertifikaten für unterschiedliche kryptographische Authentisierungsverfahren verfügt.

Die Aufgabe der Erfindung besteht darin, eine Lösung für eine verbesserte Sicherheit bei einer Authentisierung mittels digitaler Zertifikate bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen. Die Erfindung betrifft aus Sicht eines Empfängers ein Verfahren zum Entscheiden über ein Zulassen einer Authentisierung durch ein erstes digitales Zertifikat eines Kommunikationspartners bei dem Empfänger,
mit den Schritten:
- Ein Empfangen des ersten digitalen Zertifikats des Kommunikationspartners,
- ein Erfassen aus dem ersten digitalen Zertifikat:
   o einer ersten Information zu einem ersten kryptographischen Verfahren des ersten digitalen Zertifikats und
   o mindestens einer weiteren Information zu jeweils einem weiteren kryptographischen Verfahren, wobei das jeweils eine weitere kryptographische Verfahren jeweils einem weiteren digitalen Zertifikat des Kommunikationspartners zugehörig ist,
- ein Definieren eines ersten Sicherheitsniveaus des ersten kryptographischen Verfahrens aus der ersten Information,
- ein Definieren mindestens eines weiteren Sicherheitsniveaus des jeweils weiteren kryptographischen Verfahrens aus der jeweiligen mindestens einer weiteren Information,
- ein Vergleichen des ersten Sicherheitsniveaus und des mindestens eines weiteren Sicherheitsniveaus, und
- das Entscheiden über das Zulassen der Authentisierung durch das erste Zertifikat in Abhängigkeit des Vergleichens.

Ein Aspekt der Erfindung besteht somit darin, dass über das Verfahren ein erstes digitales Zertifikat bei einem Empfänger empfangen wird. Das erste digitale Zertifikat bestätigt das erste kryptographische Verfahren, insbesondere einen ersten öffentlichen Schlüssel, des Kommunikationspartners, insbesondere eines Nutzers. Das erste digitale Zertifikat enthält außerdem ein Feld (Extension Field), welches weitere digitale Zertifikate und zugehörige weitere kryptographischen Verfahren, insbesondere weitere kryptographische Algorithmen von weiteren öffentlichen Schlüsseln, des Kommunikationspartners spezifiziert, d.h. von anderen vorhandenen öffentlichen Schlüsseln des Nutzers, die in anderen digitalen Zertifikaten des gleichen Nutzers spezifiziert sind.

Ein Empfänger kann dadurch ermitteln, für welche weiteren kryptographischen Verfahren, insbesondere weiteren kryptographische Algorithmen, ein sich authentisierender Kommunikationspartner, auch als authentisierender Knoten bezeichenbar, ebenfalls über einen weiteren öffentlichen Schlüssel verfügt. Wenn der Empfänger dadurch ermitteln kann, dass der authentisierende Kommunikationspartner auch über einen weiteren öffentlichen Schlüssel und ein weiteres diesen öffentlichen Schlüssel bestätigendes digitales Zertifikat für ein starkes oder zumindest stärkeres kryptographisches Verfahren verfügt, kann er das vom authentisierenden Kommunikationspartner verwendete erste digitale Zertifikat abweisen. Dies entspricht einem negativen Entscheiden oder einem Entscheiden gegen das Zulassen der Authentisierung durch das erste Zertifikat in Abhängigkeit des Vergleichens. Dadurch werden Bidding-Down-Angriffe bei sich authentisierenden Knoten verhindert. Schwächere kryptographische Verfahren werden somit vom Empfänger nur dann akzeptiert, wenn für einen sich authentisierenden Kommunikationspartner nicht im ersten digitalen Zertifikat angegeben ist, dass er auch andere, d.h. weitere, stärkere kryptographische Verfahren nutzen könnte. Somit werden Bidding-Down-Angriffe verhindert, da ältere, schwache kryptographische Verfahren nur dann akzeptiert werden, wenn nicht bekannt ist, dass ein sich authentisierender Kommunikationspartner auch ein stärkeres kryptographisches Verfahren nutzen könnte.

Das jeweils eine weitere digitale Zertifikat kann vom gleichen Zertifikatsherausgeber wie das erste digitale Zertifikat stammen. Diesem Zertifikatsherausgeber liegt diese Information zu weiteren für einen Nutzer/Kommunikationspartner von ihm ausgestellten digitalen Zertifikate vor. Insbesondere bei Nutzung von Certificate Transparency und damit einer öffentlichen zugängliche Datenbank liegt auch eine Information vor, welche digitalen Zertifikate andere Zertifikatsherausgeber ausgestellt haben. Somit besteht eine Kenntnis darüber, welche Zertifikate existieren und es liegt auch übergreifend eine allgemein zugängliche Information vor, welche digitalen Zertifikate von anderen Zertifikatsherausgebern für einen Nutzer ausgestellt wurden. Insbesondere in diesem Fall kann auch praktikabel im ersten digitalen Zertifikat die mindestens eine weitere Information zu den jeweils weiteren kryptographischen Verfahren/Algorithmen der in diesen weiteren digitalen Zertifikaten bestätigten weiteren öffentlichen Schlüssel angegeben werden.

Im Rahmen des Definierens des ersten Sicherheitsniveaus des ersten kryptographischen Verfahrens aus der ersten Information und/oder des Definierens mindestens des weiteren Sicherheitsniveaus des jeweils weiteren kryptographischen Verfahrens aus der jeweiligen mindestens einer weiteren Information ist das "Definieren" als "Ableiten" bezeichenbar. Das erste Sicherheitsniveau und/oder das mindestens eine weitere Sicherheitsniveau werden insbesondere anhand einer Stärke und/oder Sicherheit des ersten kryptographischen Verfahrens bzw. des jeweils weiteren kryptographischen Verfahrens definiert/abgeleitet. Je höher die Stärke, desto höher ist die Sicherheit der kryptographischen Verfahren gegen Angriffe.

Das jeweils eine weitere kryptographische Verfahren ist jeweils einem weiteren digitalen Zertifikat des Kommunikationspartners zugehörig. "Zugehörig" bedeutet in diesen Zusammenhang auch "zugeordnet" und/oder dass das jeweils eine weitere kryptographische Verfahren von dem jeweils einem weiteren digitalen Zertifikat des Kommunikationspartners verwendet wird, insbesondere für eine Authentisierung. Das jeweils eine weitere kryptographische Verfahren ist somit Bestandteil des jeweils einem weiteren digitalen Zertifikats.

Das Vergleichen des ersten Sicherheitsniveaus und des mindestens einen weiteren Sicherheitsniveaus ist insbesondere als bloßes nebeneinander betrachten des ersten Sicherheitsniveaus und des mindestens eines weiteren Sicherheitsniveaus ausgebildet und/oder auch ein Finden eines höchsten oder niedrigsten Werts.

Das Entscheiden über das Zulassen ist insbesondere als ein positives Entscheiden oder ein negatives Entscheiden ausgebildet. Das positive Entscheiden resultiert insbesondere in dem Zulassen der Authentisierung durch das erste Zertifikat oder ein eingeschränktes Zulassen der Authentisierung durch das erste Zertifikat. Das negative Entscheiden resultiert insbesondere in einem Zurückweisen oder Abweisen der Authentisierung durch das erste Zertifikat.

In einer Weiterbildung der Erfindung sind das erste kryptographische Verfahren und/oder das weitere kryptographische Verfahren ausgebildet als:
- ein kryptographisches Verschlüsselungsverfahren und/oder
- ein asymmetrisches kryptographisches Verschlüsselungsverfahren und/oder
- ein asymmetrisches kryptographisches Signaturverfahren und/oder
- ein asymmetrisches kryptographisches Schlüsselkapselungsverfahren und/oder
- ein kryptographischer Algorithmus und/oder
- ein Post-Quantum-sicherer kryptographischer Algorithmus.

Von dem ersten kryptographischen Verfahren und/oder dem weiteren kryptographischen Verfahren werden somit jeweils kryptographische Schlüssel verwendet, insbesondere öffentliche Schlüssel eines Schlüsselpaars. Eine Benutzung der korrespondierenden Schlüssel in den asymmetrischen kryptographischen Verfahren wird insbesondere über Key Usage Erweiterungen im Zertifikat festgelegt.

In einer weiteren Weiterbildung der Erfindung ist die mindestens eine weitere Information zu dem jeweils einem weiteren kryptographischen Verfahren ausgebildet als:
- Ein Extension Field des ersten digitalen Zertifikats und/oder
- eine Object-ID, welche dem jeweils einem weiteren kryptographischen Verfahren zugeordnet ist.

Das Extension Field des ersten digitalen Zertifikats ist auch als ein Erweiterungsfeld bezeichenbar. Im Extension Field/ Erweiterungsfeld werden insbesondere erweiternde Informationen zum Zertifikat und/oder im Zusammenhang mit der Authentisierung durch das Zertifikat angegeben.

In einer weiteren Weiterbildung der Erfindung umfasst das Erfassen aus dem ersten digitalen Zertifikat außerdem:
- ein Erfassen einer Angabe zu einer Schlüssellänge des jeweils einem weiteren kryptographischen Verfahren und/oder
- ein Erfassen einer Referenz auf das jeweils eine weitere zweite digitale Zertifikat des Kommunikationspartners.

Die zusätzliche Angabe zu der Schlüssellänge des jeweils einem weiteren kryptographischen Verfahren hat einen zusätzlichen Sicherheitsvorteil.

Die Referenz auf die weiteren digitalen Zertifikate dieses Kommunikationspartners/Nutzers ist im ersten digitalen Zertifikat insbesondere wie von Attribut-Zertifikaten bekannt ausgebildet, insbesondere durch baseCertificateID, entityName und objectDigestInfo.

In einer weiteren Weiterbildung der Erfindung umfasst das Erfassen aus dem ersten digitalen Zertifikat außerdem:
- ein Erfassen einer Kritikalität einer tatsächlichen Existenz der mindestens einen weiteren Information zu dem jeweils einem weiteren kryptographischen Verfahren.

Die Kritikalität hat insbesondere die Ausführungsformen "critical" oder "non-critical". Falls die Kritikalität als "critical" ausgebildet ist, darf die mindestens eine weitere Information zu dem jeweils einem weiteren kryptographischen Verfahren, welches dem jeweils einem weiteren digitalen Zertifikat des Kommunikationspartners zugehörig ist, keine Scheinangabe sein, insbesondere darf die mindestens eine weitere Information nicht als "nicht bekannt" und/oder "unbekannt" ausgebildet sein. Falls die Kritikalität als "critical" ausgebildet ist, muss ein konkretes weiters kryptographisches Verfahren durch die mindestens eine weitere Information angegeben sein. Dies impliziert, dass auch das jeweils eine weitere digitale Zertifikat existieren muss.

Die Kritikalität ist eine Extension oder eine Erweiterung des ersten digitalen Zertifikats zu verstehen. Die mindestens eine weitere Information kann über die Kritikalität als "critical" oder als "non-critical" gekennzeichnet sein. Diese Kennzeichnung ist im ersten digitalen Zertifikat nicht modifizierbar und wird durch den Herausgeber der ersten digitalen Zertifikats erstellt. Durch diese Erweiterung wird sichergestellt, dass der Empfänger das erste digitale Zertifikat nicht akzeptieren kann (bei "critical"), wenn er mit dem Attribut bzgl. der mindestens einen weiteren Information nichts anfangen kann.

In einer weiteren Weiterbildung der Erfindung sind das erste Sicherheitsniveau und/oder das weitere Sicherheitsniveau ausgebildet als:
- ein numerischer Wert und/oder
- ein alphabetischer Wert und/oder
- ein quantifizierbarer Wert und/oder
- ein Wert, welche die Sicherheit gegenüber einem Angriff widerspiegelt.

Insbesondere gilt, je höher das erste Sicherheitsniveau und/oder das weitere Sicherheitsniveau ausgebildet sind, desto höher ist jeweils die Sicherheit gegenüber einem Angriff. In einer weiteren Weiterbildung der Erfindung umfasst das Vergleichen des ersten Sicherheitsniveaus und des mindestens eines weiteren Sicherheitsniveaus:
- Ein Identifizieren eines höchsten Sicherheitsniveaus aus dem ersten Sicherheitsniveaus und dem mindestens einem weiteren Sicherheitsniveau.

Das höchste Sicherheitsniveau ist somit eine Auswahl, auch als eine Teilmenge der Größe 1 bezeichenbar, aus dem ersten Sicherheitsniveau und dem mindestens einem weiterem Sicherheitsniveau.

Insbesondere sind das erste Sicherheitsniveau und das mindestens eine weitere Sicherheitsniveau somit so ausgebildet, dass sie in eine Rangfolge gebracht werden können.

Für das Identifizieren des höchsten Sicherheitsniveaus kann insbesondere eine Policy, auch als ein Regelwert bezeichenbar, herangezogen werden, anhand derer Kriterien bestimmbar ist, was als ein höherrangiges Sicherheitsniveau und damit als das höchste Sicherheitsniveau gilt. So kann die Policy für verschiede Rahmenbedingungen des Kommunikationspartners und/oder Umstände einer Durchführung des Verfahrens Kriterien für ein Identifizieren des höchsten Sicherheitsniveaus bestimmen.

In einer weiteren Weiterbildung der Erfindung ist das Entscheiden über das Zulassen der Authentisierung durch das erste Zertifikat in Abhängigkeit des Vergleichens ausgebildet als:
- Ein Entscheiden für das Zulassen, wenn das höchste Sicherheitsniveau gleich dem ersten Sicherheitsniveau ist oder
- Ein Entscheiden für ein eingeschränktes Zulassen, wenn das höchste Sicherheitsniveau größer dem ersten Sicherheitsniveau ist oder
- Ein Entscheiden gegen das Zulassen, wenn das höchste Sicherheitsniveau größer dem ersten Sicherheitsniveau ist.

Durch das eingeschränkte Zulassen entsteht eine eingeschränkte Berichtigung des Kommunikationspartner. Das Zulassen ist als ein vollständiges Zulassen zu verstehen.

In einer weiteren Weiterbildung der Erfindung umfasst das erfindungsgemäße Verfahren den weiteren Schritt:
- Ein Zulassen der Authentisierung durch das erste Zertifikat in Abhängigkeit des Entscheidens.

Insbesondere nach dem Entscheiden für das Zulassen oder nach dem Entscheiden für das eingeschränkte Zulassen, auch als ein positives Entscheiden bezeichenbar, erfolgt ein Zulassen der Authentisierung durch das erste Zertifikat. Durch das eingeschränkte Zulassen bestehen auch nach dem Zulassen der Authentisierung eingeschränkte Berichtigung des Kommunikationspartner und/oder ein eingeschränktes Vertrauen gegenüber dem Kommunikationspartner.

In einer weiteren Weiterbildung der Erfindung umfasst das erfindungsgemäße Verfahren den weiteren Schritt:
- ein Aufbauen einer Verbindung zu dem Kommunikationspartner.

In einer weiteren Weiterbildung der Erfindung umfasst das erfindungsgemäße Verfahren die weiteren Schritte:
- ein Empfangen von Empfangsdaten von dem Kommunikationspartner und/oder
- ein Senden von Sendedaten an den Kommunikationspartner.

Die Erfindung umfasst außerdem aus Sicht eines Kommunikationspartner ein Verfahren zum Authentisieren des Kommunikationspartners mittels eines digitalen Zertifikats bei einem Empfänger,
mit den Schritten:
- Ein Senden des digitalen Zertifikats, das digitale Zertifikat aufweisend:
   o eine erste Information zu einem ersten kryptographischen Verfahren des ersten digitalen Zertifikats und
   o mindestens eine weitere Information zu jeweils einem weiteren kryptographischen Verfahren, wobei das jeweils eine weitere kryptographische Verfahren jeweils einem weiteren digitalen Zertifikat des Kommunikationspartners zugehörig ist,
   und
- ein Empfangen einer Entscheidung über ein Zulassen des Authentisierens.

In einer Weiterbildung der Erfindung umfasst das erfindungsgemäße Verfahren die weiteren Schritte:
- ein Aufbauen einer Verbindung zu dem Empfänger und/oder
- ein Senden von Empfangsdaten an den Empfänger und/oder
- ein Empfangen von Sendedaten von dem Empfänger.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele und anhand der schematischen Zeichnung ersichtlich.

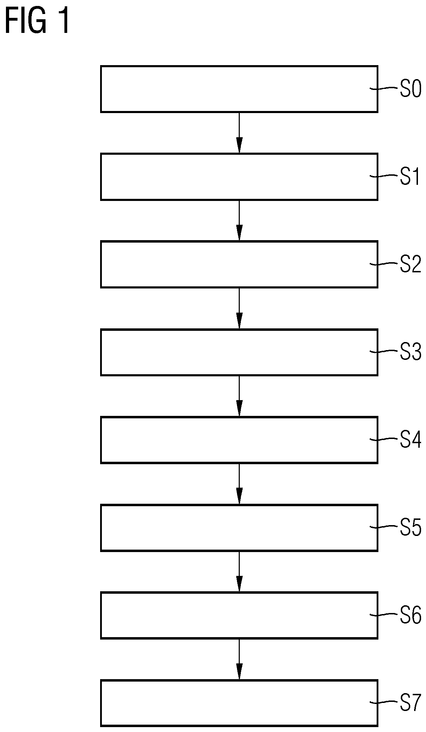

Es zeigt
- Fig. 1: ein Ablaufdiagramm des erfindungsgemäßen Verfahrens.

### DETAILLIERTE BESCHREIBUNG DER ERFINDUNG

Fig. 1 zeigt ein Ablaufdiagramm des erfindungsgemäßen Verfahrens zum Entscheiden über ein Zulassen einer Authentisierung durch ein erstes digitales Zertifikat eines Kommunikationspartners bei einem Empfänger. Das Verfahren ist aus Sicht des Empfängers beschrieben und dargestellt.

Das Verfahren umfasst die Schritte:
- Schritt S1: Ein Empfangen des ersten digitalen Zertifikats des Kommunikationspartners,
- Schritt S2: ein Erfassen aus dem ersten digitalen Zertifikat:
   o einer ersten Information zu einem ersten kryptographischen Verfahren des ersten digitalen Zertifikats und
   o mindestens einer weiteren Information zu jeweils einem weiteren kryptographischen Verfahren, wobei das jeweils eine weitere kryptographische Verfahren jeweils einem weiteren digitalen Zertifikat des Kommunikationspartners zugehörig ist,
- Schritt S3: ein Definieren eines ersten Sicherheitsniveaus des ersten kryptographischen Verfahrens aus der ersten Information,
- Schritt S4: ein Definieren mindestens eines weiteren Sicherheitsniveaus des jeweils weiteren kryptographischen Verfahrens aus der jeweiligen mindestens einer weiteren Information,
- Schritt S5: ein Vergleichen des ersten Sicherheitsniveaus und des mindestens eines weiteren Sicherheitsniveaus, und
- Schritt S6: das Entscheiden über das Zulassen der Authentisierung durch das erste Zertifikat in Abhängigkeit des Vergleichens.

Schritt S3 und Schritt S4 sind in beliebiger Reihenfolge anordbar.

Außerdem sind insbesondere weitere Schritte optional:
- Ein Zulassen der Authentisierung durch das erste Zertifikat in Abhängigkeit des Entscheidens und/oder
- ein Aufbauen einer Verbindung zu dem Kommunikationspartner und/oder
- ein Empfangen von Empfangsdaten von dem Kommunikationspartner und/oder
- ein Senden von Sendedaten an den Kommunikationspartner.

Aus Sicht des Kommunikationspartners umfasst das korrespondierende Verfahren zum Authentisieren des Kommunikationspartners mittels eines digitalen Zertifikats bei einem Empfänger, die Schritte:
- Schritt S0: Ein Senden des digitalen Zertifikats, das digitale Zertifikat aufweisend:
   o eine erste Information zu einem ersten kryptographischen Verfahren des ersten digitalen Zertifikats und
   o mindestens eine weitere Information zu jeweils einem weiteren kryptographischen Verfahren, wobei das jeweils eine weitere kryptographische Verfahren jeweils einem weiteren digitalen Zertifikat des Kommunikationspartners zugehörig ist,
   und
- Schritt S7: ein Empfangen einer Entscheidung über ein Zulassen des Authentisierens.

Schritt S0 erfolgt vor Schritt S1. Schritt S7 erfolgt nach Schritt S6.

Im Folgenden ist eine Implementierung als Ausführungsform der Erfindung beschrieben. Die folgende ASN.1 Struktur zeigt die Definition eines Zertifikates nach X.509:

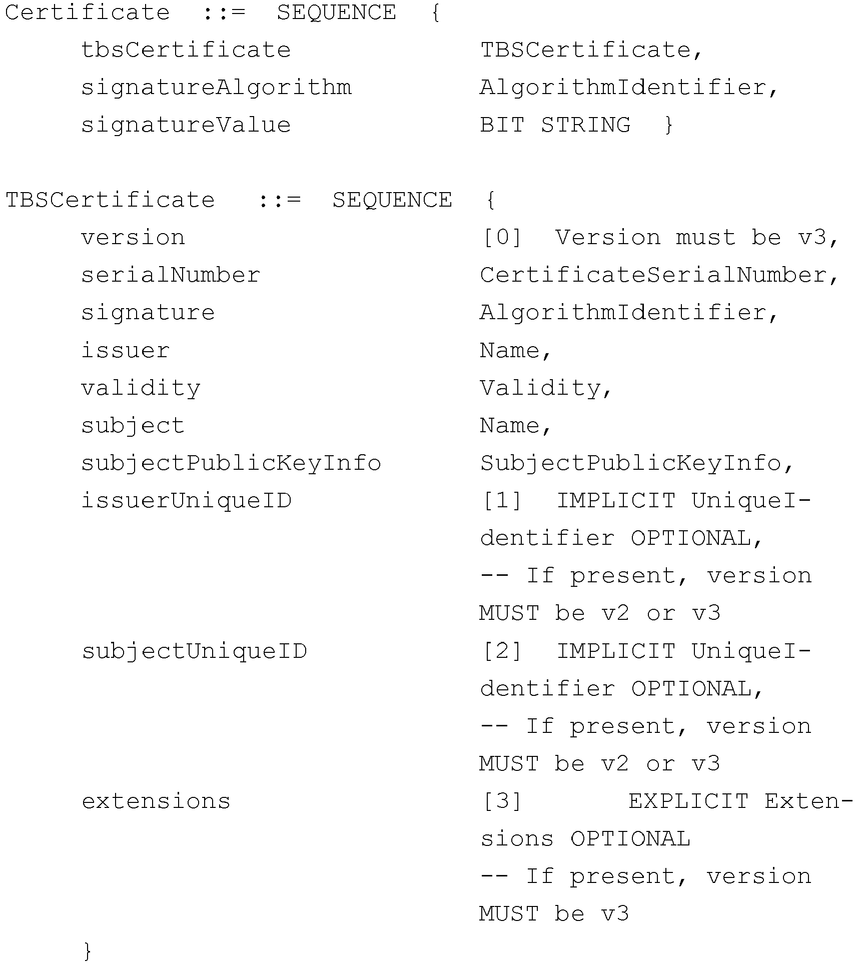

Die jeweiligen weiteren digitalen Zertifikate sind für den gleichen Nutzer/Kommunikationspartner ausgestellt. Die Angabe zum Identifier des Nutzers (eine Nutzer-ID, Nutzer = subject) kann insbesondere in den Feldern SubjectName oder Subject AltName enthalten sein. Diese Felder stimmen also zwischen den Zertifikaten des gleichen Nutzers überein.

Nach X.509 können Erweiterungen wie folgt definiert sein:

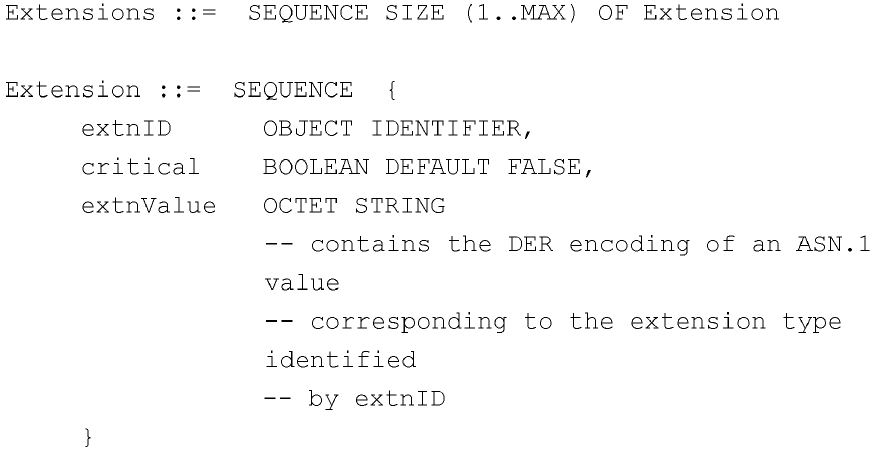

Für den oben beschriebenen Ansatz kann damit eine Extension wie folgt definiert sein:
Der Object Identifier extnID für die Extension kann nach X.509 wie folgt definiert sein:

```
  id-SubjectAltCrptoAlg OBJECT_IDENTIFIER::= { id-ce-
  SubjectAltCrptoAlg }
```

Der Wert des AttributeValue kann zum Beispiel wie folgt definiert sein:

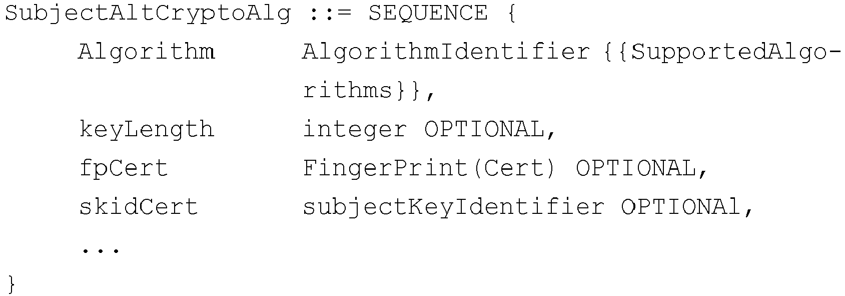

Für den Fingerprint des zugeordneten weiteren digitalen Zertifikates kann die in ITU-T X.509 Struktur genutzt werden. Damit kann optional eine Referenz auf das entsprechende weitere digitale Zertifikat, das den weiteren kryptographischen Algorithmus unterstützt, eingefügt werden.

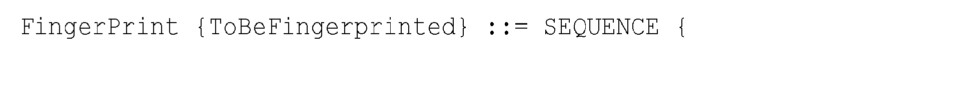

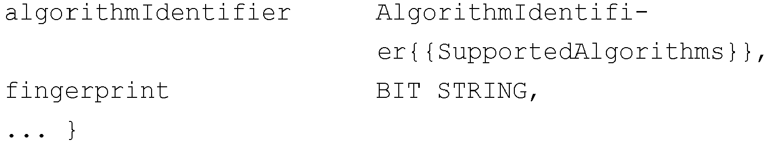

Alternativ kann hier auch der in X.509 definierte subject-KeyIdentifier des weiteren digitalen Zertifikates angegeben sein. Dies hat den Vorteil, dass dieser sich bei einer Rezertifizierung des weiteren öffentlichen Schlüssels nicht ändert.

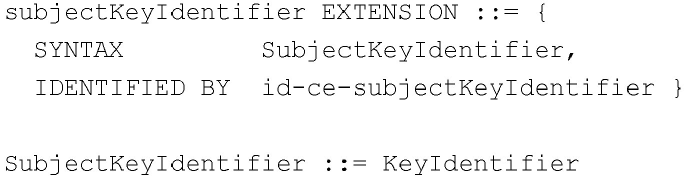

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Entscheiden über ein Zulassen einer Authentisierung durch ein erstes digitales Zertifikat eines Kommunikationspartners bei einem Empfänger,
mit den Schritten:
- Ein Empfangen (S1) des ersten digitalen Zertifikats des Kommunikationspartners,
- ein Erfassen (S2) aus dem ersten digitalen Zertifikat:
o einer ersten Information zu einem ersten kryptographischen Verfahren des ersten digitalen Zertifikats und
o mindestens einer weiteren Information zu jeweils einem weiteren kryptographischen Verfahren, wobei das jeweils eine weitere kryptographische Verfahren jeweils einem weiteren digitalen Zertifikat des Kommunikationspartners zugehörig ist,
- ein Definieren (S3) eines ersten Sicherheitsniveaus des ersten kryptographischen Verfahrens aus der ersten Information,
- ein Definieren (S4) mindestens eines weiteren Sicherheitsniveaus des jeweils weiteren kryptographischen Verfahrens aus der jeweiligen mindestens einer weiteren Information,
- ein Vergleichen (S5) des ersten Sicherheitsniveaus und des mindestens eines weiteren Sicherheitsniveaus, und
- das Entscheiden (S6) über das Zulassen der Authentisierung durch das erste Zertifikat in Abhängigkeit des Vergleichens.

2. Verfahren nach Anspruch 1, wobei das erste kryptographische Verfahren und/oder das weitere kryptographische Verfahren ausgebildet sind als:
- ein kryptographisches Verschlüsselungsverfahren und/oder
- ein asymmetrisches kryptographisches Verschlüsselungsverfahren und/oder
- ein asymmetrisches kryptographisches Signaturverfahren und/oder
- ein asymmetrisches kryptographisches Schlüsselkapselungsverfahren und/oder
- ein kryptographischer Algorithmus und/oder
- ein Post-Quantum-sicherer kryptographischer Algorithmus.

3. Verfahren nach einem der vorhergehenden Ansprüche, wobei die mindestens eine weitere Information zu dem jeweils einem weiteren kryptographischen Verfahren ausgebildet ist als:
- Ein Extension Field des ersten digitalen Zertifikats und/oder
- eine Object-ID, welche dem jeweils einem weiteren kryptographischen Verfahren zugeordnet ist.

4. Verfahren nach einem der vorhergehenden Ansprüche, wobei das Erfassen aus dem ersten digitalen Zertifikat außerdem umfasst:
- ein Erfassen einer Angabe zu einer Schlüssellänge des jeweils einem weiteren kryptographischen Verfahren und/oder
- ein Erfassen einer Referenz auf das jeweils eine weitere zweite digitale Zertifikat des Kommunikationspartners.

5. Verfahren nach einem der vorhergehenden Ansprüche, wobei das Erfassen aus dem ersten digitalen Zertifikat außerdem umfasst:
- ein Erfassen einer Kritikalität einer tatsächlichen Existenz der mindestens einen weiteren Information zu dem jeweils einem weiteren kryptographischen Verfahren.

6. Verfahren nach einem der vorhergehenden Ansprüche, wobei das erste Sicherheitsniveau und/oder das weitere Sicherheitsniveau ausgebildet sind als:
- ein numerischer Wert und/oder
- ein alphabetischer Wert und/oder
- ein quantifizierbarer Wert und/oder
- ein Wert, welche die Sicherheit gegenüber einem Angriff widerspiegelt.

7. Verfahren nach einem der vorhergehenden Ansprüche, wobei das Vergleichen des ersten Sicherheitsniveaus und des mindestens eines weiteren Sicherheitsniveaus umfasst:
- Ein Identifizieren eines höchsten Sicherheitsniveaus aus dem ersten Sicherheitsniveaus und dem mindestens einem weiteren Sicherheitsniveau.

8. Verfahren nach Anspruch 7, wobei das Entscheiden über das Zulassen der Authentisierung durch das erste Zertifikat in Abhängigkeit des Vergleichens ausgebildet ist als:
- Ein Entscheiden für das Zulassen, wenn das höchste Sicherheitsniveau gleich dem ersten Sicherheitsniveau ist oder
- Ein Entscheiden für ein eingeschränktes Zulassen, wenn das höchste Sicherheitsniveau größer dem ersten Sicherheitsniveau ist oder
- Ein Entscheiden gegen das Zulassen, wenn das höchste Sicherheitsniveau größer dem ersten Sicherheitsniveau ist.

9. Verfahren nach einem der vorhergehenden Ansprüche, mit dem weiteren Schritt:
- Ein Zulassen der Authentisierung durch das erste Zertifikat in Abhängigkeit des Entscheidens.

10. Verfahren nach Anspruch 9, mit dem weiteren Schritt:
- ein Aufbauen einer Verbindung zu dem Kommunikationspartner.

11. Verfahren nach Anspruch 10, mit den weiteren Schritten:
- ein Empfangen von Empfangsdaten von dem Kommunikationspartner und/oder
- ein Senden von Sendedaten an den Kommunikationspartner.

12. Verfahren zum Authentisieren eines Kommunikationspartners mittels eines digitalen Zertifikats bei einem Empfänger, mit den Schritten:
- Ein Senden (S0) des digitalen Zertifikats, das digitale Zertifikat aufweisend:
o eine erste Information zu einem ersten kryptographischen Verfahren des ersten digitalen Zertifikats und
o mindestens eine weitere Information zu jeweils einem weiteren kryptographischen Verfahren, wobei das jeweils eine weitere kryptographische Verfahren jeweils einem weiteren digitalen Zertifikat des Kommunikationspartners zugehörig ist,
und
- ein Empfangen (S7) einer Entscheidung über ein Zulassen des Authentisierens.

13. Verfahren nach Anspruch 12, mit den weiteren Schritten:
- ein Aufbauen einer Verbindung zu dem Empfänger und/oder
- ein Senden von Empfangsdaten an den Empfänger und/oder
- ein Empfangen von Sendedaten von dem Empfänger.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
